# EUROPÄISCHE PATENTSCHRIFT

(11) **EP 1 229 182 B1**
(45) Veröffentlichungstag und Bekanntmachung des Hinweises auf die Patenterteilung: **02.05.2003**
(21) Anmeldenummer: 01102156.5
(22) Anmeldetag: 02.02.2001
(51) Int. Cl.: E04F 15/04, B27G 11/00, C09J 5/00, C09J 5/04

(54) **Verbindung zwischen Fügeflächen von zwei Paneelen eines Fussbodenbelages**
Connection between the joining surfaces of two floor covering panels
Connexion entre les surfaces de jointure de deux panneaux de revêtement de sol

(43) Veröffentlichungstag der Anmeldung: 07.08.2002
(73) Patentinhaber: Fritz Egger GmbH & Co, 3105 Unterradlberg (AT)
(72) Erfinder: Steinwender, Martin, 2380 Perchtoldsdorf (AT)
(74) Vertreter: Cohausz & Florack

(56) Entgegenhaltungen:
- DE-A- 4 324 743
- DE-U- 29 703 962
- FR-A- 2 675 078
- GB-A- 2 133 374

## Beschreibung

Die Erfindung betrifft eine Verbindung zwischen Fügeflächen von zwei Paneelen eines Fußbodenbelags sowie ein Verfahren zum Herstellen einer Klebermatrix auf einer Fügefläche einer Paneele. Insbesondere betrifft die Erfindung eine Verbindung zwischen Fügeflächen, auf denen eine Matrix mit einem Klebstoffsystem aufgebracht ist, das seine die Fügeflächen verbindende Wirkung erst beim Fügen der Paneele entfaltet. Das Aufbringen des Klebers kann dabei auch zeitlich beabstandet vom Zusammenfügen der Paneele erfolgen, z.B. bei der industriellen Herstellung der Paneele.

Unter Paneelen sind allgemein Paneele von Fußbodenbelägen zu verstehen, die im Zuge ihrer weiteren Verarbeitung mit anderen Paneelen zu einer Gesamtheit eines Fußbodenbelages vereinigt werden sollen. Die miteinander zu fügenden Paneelen können von einheitlicher Dimension, Beschaffenheit und auch aus denselben Werkstoffen bestehen, können sich aber auch grundsätzlich in allen möglichen Bereichen unterscheiden. Insbesondere, aber nicht ausschließlich betrifft die Erfindung Paneele, von denen mindestens eine Paneele aus einem zellulosehaltigen Material besteht.

Für das Fügen von Paneelen sind verschiedene Techniken wie Nageln, Schrauben, formschlüssiges Verbinden, Einrasten bei leimlosen Verlegesysteme für Fußbodenbeläge, und Kleben bekannte Technologien.

Das Kleben bietet viele Vorteile gegenüber rein mechanisch wirkenden Verbindungen zwischen Paneelen. Einerseits erlaubt die flächige Verbindung der Paneelen eine gute Übertragung von Kräften von einer Paneele auf eine andere. Ebenso kann, wenn gewünscht bzw. erforderlich, aufgrund des vollständigen Ausfüllens der Verbindungsfuge durch den Kleber eine geschlossene Fuge ausgebildet werden, die z.B. das Eindringen von Fremdstoffen wie z.B. Staub, Wasser und dergleichen während der Montagephase und im Zuge der Benutzung verhindert. Des weiteren kann durch Kleben im Gegensatz zum Nageln und Schrauben eine Verbindung erfolgen, die äußerlich keine Verbindungsmittel erkennen lässt und dadurch optisch nicht erkennbar ist. Dies ist vor allem für Fußbodenbeläge von großer Wichtigkeit.

Das Aufbringen von Kleber im Zuge des Fügens der Paneelen während der Montage ist in der Regel sehr zeitaufwändig und erfordert fachliche Kenntnis über Werkstoffeigenschaften und geeignete Klebesysteme bzw. Geschick des Ausführenden, um das gewünschte Ergebnis zu erreichen. Probleme können dabei z.B. die offene Zeit des Klebers sein, also die maximale Zeit, die zwischen Aufstreichen des Klebers und Fügen der Teile verstreichen darf, um eine ausreichende Klebeverbindung zu erhalten. Weitere Probleme stellen die Beschaffenheit des Klebers selbst, da bei zu geringer Viskosität ein Abtropfen des Klebers auftreten kann, und der erhöhte Montageaufwand bedingt durch das Aufbringen des Klebers dar.

Für Laminatfußböden beispielsweise wird empfohlen, deutlich mehr Kleber aufzubringen als erforderlich. Der Kleber soll nach dem Fügen der Nut-Feder-Verbindung auf der gesamten Länge der Fügestrecke herausquellen, um ein vollständiges Abdichten der Klebefuge zu erreichen. Der überschüssige Kleber muss dann aufwändig entfernt werden, um ein optisch einwandfreies Resultat zu erzielen.

Die der Erfindung am nächsten kommende FR 2 675 078 offenbart ein mehrschichtiges Kunststoff- oder Elastomerprodukt und ein Montageverfahren zum Aufbau einer Verbindung zwischen jeweils zwei Elementen. Das Kunststoffoder Elastomerprodukt hat die Form einer Platte, die aus einer Überlagerung von mindestens zwei Materialschichten gebildet wird. Die Schichten sind mit einem Versatz zueinander übereinander gelagert, um auf mindestens einer Seite mindestens eine Auflagefläche zu bilden, die dazu bestimmt ist, mit der komplementären angrenzenden Platte überdeckt zu werden. Dabei werden auch Nut- Feder- Verbindungen offenbart. Die Druckschrift beschreibt darüber hinaus das Verkleben der Platten, wobei auch die Verwendung von Mikrokapseln, die ein Klebemittel enthalten, als eine mögliche Form des Verklebens der Platten mit offenbart wird. Bei dem Kleber handelt es sich um einen Einkomponenten-Kleber, der ähnlich wie bei einem Adhäsionskleber seine Klebewirkung entfaltet.

Die GB 2 133 374 A offenbart Klebstoff enthaltende Mikrokapseln.

Aus dem Stand der Technik der DE 297 03 962 Ul ist ein Fußboden- oder Wandbelag bekannt, bei dem die Fügeflächen als Nut-Feder-Profil ausgebildet sind, die mit einem Kontaktklebstoff beschichtet sind. Dieser kann bereits werkseitig aufgebracht worden sein, so dass beim Fügen der Paneelen entlang der Fügeflächen eine Klebeverbindung entsteht. Ein Kontaktklebstoff ist ein Klebstoff, der als Lösung auf die zu verklebenden Fügeflächen aufgebracht wird und der erst nach weitgehendem Verdunsten des Lösungsmittels, also wenn die Klebstofffilme scheinbar trocken sind, unter möglichst großer Druckeinwirkung zusammengefügt wird. Die zusammengefügten Klebstofffilme bilden dann im wesentlichen unter Verdampfen restlicher Lösungsmittel eine Klebstoffschicht mit hoher Festigkeit aus. Die Klebewirkung beruht dabei auf den physikalisch wirkenden Adhäsionskräften. Problematisch bei den im Stand der Technik verwendeten Kontaktklebstoffen ist die permanent vorhanden latente Klebewirkung durch die Adhäsionskräfte. Da auch einseitig wirkende Kontaktklebstoffschichten bei einem Andrücken an beliebige Gegenstände zu einer Klebewirkung führen, müssen die so vorbehandelten Paneelen vor jeglichem Andrücken an andere Gegenstände gesichert werden, bevor diese mit anderen Paneelen zusammengefügt werden. Dieses gilt insbesondere auch für ein Anliegen an Verpackungsmaterial.

Der Erfindung liegt daher das technische Problem zugrunde, einerseits auf die Vorteile einer Klebeverbindung im Vergleich zu mechanischen Fügesystemen nicht zu verzichten, gleichzeitig aber den bauseitigen Aufwand und den Aufwand der Handhabung der Paneelen nicht zu erhöhen.

Das zuvor aufgezeigte technische Problem wird gemäß einer ersten Lehre der Erfindung durch eine Verbindung zwischen zwei Paneelen mit den Merkmalen des Anspruches 1 gelöst. Weitere Merkmale sind in den davon abhängigen Unteransprüchen beschrieben.

Die Erfindung zeichnet sich also durch einen Schichtaufbau innerhalb der Matrix aus, bei dem einerseits mindestens eine Schicht mit einer hohen Konzentration von Kapseln und mindestens eine weitere Schicht, die keine Kapseln aufweist vorhanden sind, dadurch kann die Wirkung des aus den Kapseln freigesetzten Stoffes des Reaktionsklebstoffsystems gezielt an den in der Matrix vorhandenen weiteren Stoff bzw. Stoffen des Reaktionsklebstoffsystems in ihrer Zusammenwirkung angepasst werden. Ist beispielsweise die oberste Schicht der Matrix gezielt mit Kapseln versehen, während eine darunter liegende Matrixschicht keine Kapseln enthält, so wirken die mechanischen Kräfte gezielt in der oberen Schicht. Somit werden in effektiver Weise der in den Kapseln enthaltene Soff des Reaktionsklebstoffsystems freigesetzt, der anschließend mit dem weiteren Stoff des Klebstoffsystems, der sich in der weiter unterliegenden Matrixschicht befindet, in Reaktion treten kann.

Die vorliegende Erfindung kann insbesondere bei beliebigen Paneelen angewendet werden, die aus gleichen oder unterschiedlichen'Materialien bestehen. Dabei kommt es nicht auf die Art des jeweiligen Materials an, es können insbesondere Kunststoffe und natürliche Materialien zum Einsatz kommen.

In bevorzugter Weise besteht dabei jeweils mindestens eine Paneele zumindest teilweise aus einem zellulosehaltigen Material, beispielsweise aus einem zumindest teilweise aus einjährig nachwachsenden Pflanzen wie Gras oder Stroh bestehenden Material, das vorzugsweise verpresst und/oder mit einem Bindemittel versehen ist. Insbesondere kann das Material auch zumindest teilweise aus einem ligno-zellulosehaltigen Material bestehen, wie Holz oder einem Holzwerkstoff wie mitteldichte Faserplatte (MDF) oder hochdochte Faserplatte (HDF).

Erfindungsgemäß wird für das dauerhafte Verbinden der Paneelen ein Reaktionsklebstoffsystem eingesetzt. Reaktionsklebstoffe sind Klebstoffe, die über chemische Reaktionen, bspw. Polyreaktionen oder Vernetzung von zwei oder mehr Klebstoffkomponenten, die durch Wärme, zugesetzte Härter oder andere Komponenten bzw. durch Strahlung ausgelöst werden können, aushärten und abbinden. Die sich daraus ergebenden Verklebungen sind sehr fest und dauerhaft.

Die an der Reaktion teilnehmenden Stoffe sind zum einen die Klebstoffkomponenten selbst, die nach Abschluss der chemischen Reaktion Teil der ausgehärteten Klebstoffschicht sind. Zu diesen Klebstoffkomponenten gehören auch die sogenannten Härter. Zum anderen sind die Stoffe Reaktionsbeschleuniger und/oder Koinitiatoren. Unter Koinitiator versteht man eine Komponente, die den Härter bzw. den Beschleuniger erst beim Vorliegen von bestimmten Bedingungen, z.B. Temperatur, pH-Wert, Strahlungsenergie oder Feuchtigkeit, seine Wirkung entfalten lässt.

Beispielsweise sind Reaktionsklebstoffsysteme auf Isocyanatbasis, auf Epoxybasis, auf Basis ungesättigter Systeme ebenso geeignet wie sulfidische Systeme, Kleber auf Siloxanbasis und säurehärtende Systeme. Grundsätzlich können aber alle Systeme verwendet werden, die zumindest zwei Komponenten für die chemische Härtungsreaktion benötigen. Härtungsreaktionen können durch Radikalbildner wie Peroxide, Azoverbindungen, Redox-Systeme, Strahlung (UV und sichtbares Licht) oder durch Säurebildner erreicht werden. Ebenso sind auch einkomponentige Klebstoffsysteme möglich. Die Härtung erfolgt dann in Kombination mit Feuchtigkeit, wie bspw. bei Einkomponenten-Isocyanat-systemen.

Weiter erfindungsgemäß ist das Reaktionsklebstoffsystem gekapselt ausgeführt, wobei zumindest einer der an der chemischen Reaktion teilnehmenden Stoffe in gekapselter Form vorliegt, also in Kapseln eingebracht ist. Somit kann eine Klebstoffkomponente, ein Härter, ein Beschleuniger und/oder ein Koinitiator in den Kapseln enthalten sein.

Unter Kapseln versteht man die Umhüllung eines Stofftröpfchens. Eine Vielzahl von so erhaltenen Kapseln sind in einer Matrix dispergiert. Die Umhüllung der Kapsel muss zum einen so ausgestaltet sein, dass der darin enthaltene Stoff einerseits den Auftragungsprozess und die Lagerung bis zum Fügen der Teile ohne ungewollte Veränderung übersteht und zudem eine Verträglichkeit mit der Matrix vorhanden ist. Andererseits muss eine Aktivierung der Härtungsreaktion im Zuge des Fügens möglich sein. Das wird dadurch erreicht, dass die Kapselhülle aufgebrochen wird, wodurch sich der nun freiliegende Stoff des Klebstoffsystems partiell oder vollständig auf der Fügeoberfläche befindet und mit mindestens einem weiteren Stoffe bzw. Klebstoffkomponente des reaktiven Klebstoffsystems eine chemische Reaktion eingeht bzw. die chemische Reaktion beschleunigt oder initiiert. Erst dadurch wird als Folge des Zusammenfügens die Verklebung der beiden Paneelen bewirkt.

Das Aufbrechen der Kapseln kann z.B. durch die Einwirkung von mechanischen Kräften, also beispielsweise durch Druck oder Reibung erfolgen. Für das Aktivieren des Reaktionsklebstoffs sind neben einer Druck- oder Reibungskrafteinwirkung aber auch alle anderen Techniken, die ein Aufbrechen der Kapseln bewirken, geeignet. Das Aufbrechen der Kapseln kann durch die Verwendung von Hilfsmitteln wie z.B. durch das Auftragen einer die Kapsel auflösenden Flüssigkeit, wie z.B. Wasser durch Sprühen, Streichen, Rollen oder ähnliches, durch die Einwirkung von Ultraschallenergie, Hochfrequenzenergie, Wärmeenergie z.B. Infrarot-Strahlung oder die Einwirkung von UV-Strahlung erfolgen.

Das reaktive Klebstoffsystem selbst kann aus einer einzigen Komponente, die mit Wasser als zweiter Komponente reagiert, oder auch aus zwei oder mehreren Komponenten bzw. Stoffen bestehen. Teile der Matrix oder die gesamte Matrix selbst können auch Komponenten bzw. Stoffe des Klebstoffsystems sein.

Das Aufbringen bei einem reaktiven Klebstoffsystem aus mehreren Komponenten kann derart erfolgen, dass auf einer Fügeoberfläche die eine Komponente als gekapseltes System aufgebracht wird und dass die andere Komponente in analoger Weise auf der anderen Fügeoberfläche plaziert wird. Im Zuge des Fügens werden die Kapseln in einer der zuvor beschrieben Vorgehensweisen zum Aufbrechen gebracht, wodurch die beiden Komponenten miteinander in Kontakt und in Mischung gebracht werden. Ein rasches Härten des Klebers ist die Folge.

Die Matrix, in der die Kapseln dispergiert sind, hat primär die Aufgabe, die Kapseln auf der Oberfläche der Fügeflächen so nachhaltig zu verankern, dass sie bis zum Zeitpunkt des Zusammenfügens der Paneelen dort verbleiben. Die Matrix besteht dazu entweder aus einem Klebstoff, insbesondere einem Schmelzklebstoff, oder aus einem Wachs oder Harz.

Daneben kann die Matrix auch zusätzliche Aufgaben übernehmen, bspw. eine Versiegelung der Fügeoberfläche, insbesondere als Schutz vor dem Eindringen von Feuchtigkeit, eine Verfestigung der Fügeoberfläche oder die Funktion eines Haftvermittlers, wenn die gekapselte Klebstoffkomponente Haftungsprobleme mit der Fügeoberfläche aufweist.

Die Matrix kann aber auch selbst zumindest teilweise Stoff des Klebstoffsystems sein. In diesem Fall beinhalten die Kapseln jenen Stoff bzw. jene Stoffe, die dazu führen, dass der in der Matrix enthaltene Stoff des Klebstoffsystems mit diesen gemeinsam zur chemischen Reaktion mit nachfolgender Härtung gebracht wird.

Das Aufbringen des gekapselten Klebstoffsystems kann entweder nur auf einer Fügefläche oder auf beiden Fügeflächen erfolgen. Ein einseitiges Aufbringen ist dann unumgänglich, wenn nur eines der beiden Paneelen für eine vorherige Bearbeitung zugänglich ist.

Bei der Verwendung der zuvor beschriebenen gekapselten Klebstoffsysteme für Laminatfußböden ergeben sich erhebliche Produktvorteile. Bisher gibt es prinzipiell zwei Arten von Verbindungsmöglichkeiten. Bei der einen erfolgt die Fügung der einzelnen Paneelen mittels eines Klebers, in der Regel einem PVAc-Kleber, sprich einem Weißleim. Bei der anderen erfolgt eine mechanische Kupplung bzw. Verriegelung der Paneelen, bei der eine zusätzliche Verklebung aber ebenso möglich ist. Die Verwendung des Weißleimes erfordert jedoch einen hohen Zeitaufwand für die Montage. Der Leim wird händisch aufgetragen und muss beim Fügen der Teile oberflächlich herausquellen. Erst nach erfolgter Trocknung wird der überstehende Leim abgereinigt.

Der Vorteil der Verleimung der Paneelen gegenüber mechanischen Verriegelungssystemen liegt im Erhalt einer geschlossenen Oberfläche, die dem Eindringen von Wasser sehr gut vorbeugt. Der Vorteil der mechanischen Verriegelung liegt in einer raschen Verlegung. Eine bevorzugte Ausgestaltung der vorliegenden Erfindung ermöglicht nun beide Vorteile zu kombinieren, ohne den Aufwand in der Behandlung vor einem Zusammenfügen der Paneelen zu erhöhen. Zum einen kann wie bei Weißleim eine geschlossene, fugenfreie Oberfläche erhalten werden, zum anderen ist eine rasche Verlegung wie bei mechanisch verriegelnden Verlegesystemen möglich.

Gemäß einer zweiten Lehre der vorliegenden Erfindung wird das oben aufgezeigte Problem auch durch eine Paneele mit mindestens einer Fügefläche mit den Merkmalen des Anspruches 19 gelöst, bei dem die zuvor aufgezeigten Merkmale und Vorteile in Form einer auf der mindestens einen Fügefläche angeordneten Matrix mit einem gekapselten reaktiven Klebstoffsystem realisiert werden.

Bei dem Verfahren zum Herstellen einer Matrix auf einer Fügefläche wird mit Hilfe eines Auftragssystems mindestens eine Matrixschicht aufgebracht, die zumindest teilweise Matrixmaterial und zumindest teilweise Kapseln aufweist, und bei dem die so erhaltene Matrixschicht zumindest teilweise verfestigt wird. Somit wird eine für das Ausbilden eines reaktiven gekapselten Klebstoffsystems auf der bzw. den Fügeflächen geeignete Matrixschicht aufgebracht.

Unter Verfestigen ist dabei zu verstehen, dass die Matrixschicht eine Konsistenz aufweist, dass diese formstabil ist und weitgehend inhärent gegenüber Anhaften an Verpackungen und anderen Oberflächen ist. Dieses wird insbesondere dann durchgeführt, wenn es die nachfolgenden Bearbeitungsschritte erfordern, z.B. Verpacken, Zwischenstapeln etc.. Die Auftragstechnik muss zudem an die bspw. plane oder sphärisch geformte Form der mit Kapseln zu bestückenden Fügefläche angepasst werden.

Es gibt verschiedene bevorzugte Ausgestaltungen des Verfahrens zur Herstellung der erfindungsgemäßen Paneelen, die im folgenden beschrieben werden.

Bei einer ersten bevorzugten Ausgestaltung des Verfahrens werden zunächst die Kapseln vor dem Auftragen in dem Matrixmaterial dispergiert. Mit Hilfe des Auftragssystems wird dann mindestens eine Matrixschicht aus Matrixmaterial auf zumindest einen Teil der Fügefläche aufgetragen, . die dann in im wesentlichen gleichmäßiger Verteilung die Kapseln enthält. Danach wird die so erhaltene Matrixschicht zumindest teilweise verfestigt.

Bei einer zweiten bevorzugten Ausgestaltung des Verfahrens wird mit Hilfe des Auftragssystems mindestens eine Matrixschicht aus Matrixmaterial auf zumindest einen Teil der Fügefläche aufgetragen. Besondere Rücksicht auf geringe äußere Krafteinwirkung muss dabei wegen des Fehlens der Kapseln nicht genommen werden. Die noch nicht vollständig verfestigte, insbesondere noch feuchte Matrixschicht weist leicht klebende Eigenschaften auf. Auf diese werden in einem zweiten Schritt die Kapseln aufgebracht, die vorzugsweise als feines Pulver vorliegen. Nachfolgend wird die so erhaltene Matrixschicht zumindest teilweise verfestigt.

Bei beiden zuvor beschriebenen Verfahren besteht das Matrixmaterial zumindest teilweise aus einem gelösten Klebstoff, der nach dem Auftragen zumindest teilweise durch eine Trocknung verfestigt wird. Das Antrocknen kann dabei mit bekannten Trocknungstechnologien erfolgen, z.B. Heißluft, Infrarot-Strahlung, Hochfrequenz, Mikrowelle erfolgen.

Bei einer dritten bevorzugten Ausgestaltung des vorliegenden Verfahrens wird mit Hilfe des Auftragssystems mindestens eine Matrixschicht aus mit Matrixmaterial zumindest teilweise ummantelten Kapseln aufgebracht, die anschließend zumindest teilweise verfestigt wird. Insbesondere besteht dabei das Matrixmaterial zumindest teilweise aus einem Schmelzkleber, der nach dem Auftragen durch Erwärmen zumindest teilweise angeschmolzen und nachfolgend durch Abkühlen wieder verfestigt wird. Dadurch wird aus der Umhüllung der Kapseln einerseits eine im wesentlichen durchgängige Matrixschicht erzeugt und andererseits kommt es durch das Anschmelzen des Schmelzklebstoffes zu einem guten Anhaften der Matrixschicht an der Fügefläche.

Bei dem Verfahren zum Herstellen einer Matrix mit einer Vielzahl von Kapseln auf einer Fügefläche kann das Aufbringen des Klebstoffsystems in Abhängigkeit von der Viskosität und der Stabilität der Kapseln gegenüber der Einwirkung durch äußere Kraft mit üblichen Auftragssystemen wie Sprühen, Streichen, Walzen, Spachteln, Streuen und dergleichen erfolgen.

Ein Absaugen von möglicherweise zu viel aufgebrachten Kapseln, das letztlich keine ausreichende Verankerung in der Matrix gefunden hat, kann vorteilhaft sein. Die abgesaugten Kapseln können dem Vorrat an Kapseln wieder zugeführt werden. Auch ein mehrfacher Auftrag von Kapseln, die gleichartige Stoffen und/oder andere Stoffen des Klebstoffsystems beinhalten, ist möglich.

Nach dem Auftragen der Kapseln kann der Auftrag einer weiteren Matrixschicht wie zuvor beschrieben erfolgen. Damit erreicht man eine bessere Verankerung der Kapseln auf der Oberfläche. Diese Schicht kann z.B. mit den Matrixkomponenten der ersten Schicht identisch oder auch aus anderen Stoffen zusammengesetzt sein. Ein anschließendes Verfestigen, wie es zuvor beschrieben wurde, kann ebenso erfolgen. Auch ein mehrlagiger Aufbau von Matrix und Kapseln ist möglich.

Die Erfindung wird im folgenden anhand von Ausführungsbeispielen näher erläutert, wozu auf die beigefügte Zeichnung Bezug genommen wird. In der Zeichnung zeigen
- Fig. 1: ein erstes Ausführungsbeispiel von Paneelen mit Fügeflächen für eine erfindungsgemäßen Verbindung, wobei die Paneelen voneinander beabstandet angeordnet sind,
- Fig. 2: das in Fig. 1 dargestellte Ausführungsbeispiel nach einem Zusammenfügen der Paneelen,
- Fig. 3a-d: verschiedene Ausschnitte gemäß III in Fig. 1, die verschiedene Ausgestaltungen der Fügematrix darstellen,
- Fi.4,5: ein zweites Ausführungsbeispiel von Paneelen mit Fügeflächen für eine erfindungsgemäßen Verbindung,
- Fig. 6-8: ein dritte Ausführungsbeispiel von Paneelen mit Fügeflächen für eine erfindungsgemäßen Verbindung,
- Fig. 9: eine Darstellung zur Verdeutlichung eines durchgeführten Tests zur Bestimmung der Stärke der erfindungsgemäßen Verbindung.

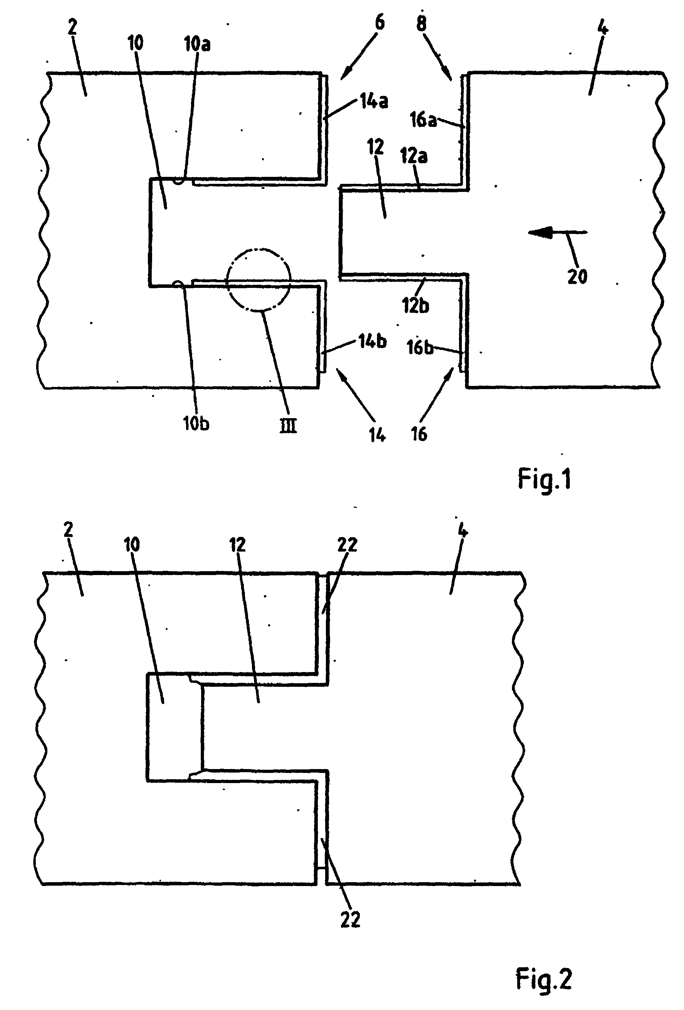

Die Fig. 1 und 2 zeigen eine erfindungsgemäße Verbindung zwischen zwei Paneelen 2 und 4. Beide Paneelen 2 und 4 weisen zumindest abschnittsweise miteinander korrespondierende Fügeflächen 6 und 8 auf, die im verbundenen Zustand aneinander anliegen. Vorliegend sind die Fügefläche 6 mit einer Nut 10 und die Fügefläche 8 mit einer Feder 12 als Nut-Feder-Profil ausgebildet, jedoch soll darin keine Beschränkung der Erfindung verstanden werden. Wie weiter unten noch erläutert wird, kann die erfindungsgemäße Verbindung auch an beliebig geformten, also auch stumpfen Fügeflächen angewendet werden.

Auf beiden Fügeflächen 6 und 8 ist, wie Fig. 1 zeigt, eine Matrix 14 bzw. 16 abschnittsweise angeordnet. Ein erster Abschnitt 14a der Matrix 14 verläuft bei der Paneele 2 vom oberen Rand der Fügefläche 6 bis zur Oberseite 10a der Nut 10, während sich der andere Abschnitt 14b der Matrix 14 von der Unterseite 10b der Nut 10 bis zum unteren Rand der Fügefläche 6 erstreckt. Des weiteren verläuft ein erster Abschnitt 16a der Matrix 16 vom oberen Rand der Fügefläche 8 bis zur Oberseite 12a der Feder 12, während sich ein zweiter Abschnitt 16b der Matrix 16 von der Unterseite 12b der Feder 12 bis zum unteren Rand der Fügeflache 8 erstreckt.

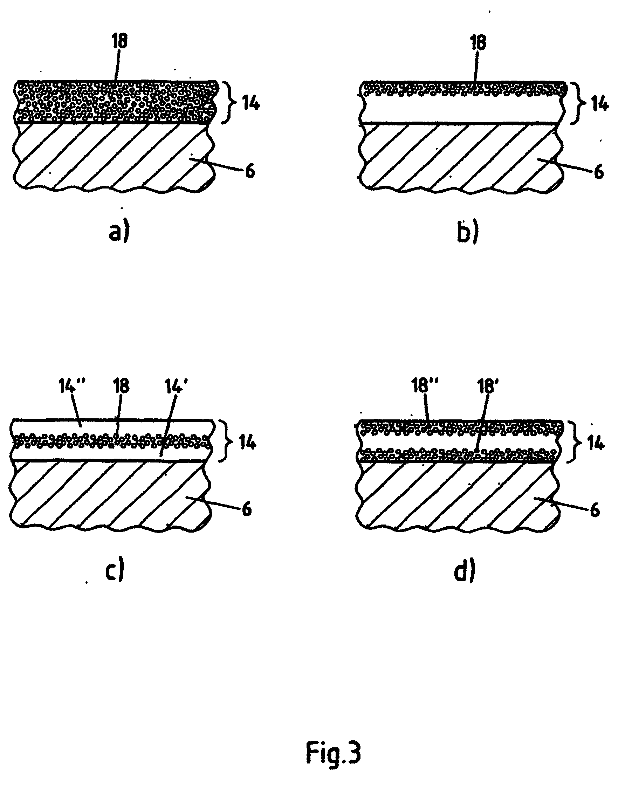

Der mit III gekennzeichneten Ausschnitt in Fig. 1 ist in den Fig. 3a bis 3d vergrößert für verschiedene Ausgestaltungen der Matrix dargestellt.

Die Fig. 3a bis 3d, die nachfolgend noch näher erläutert werden, zeigen eine Vielzahl von Kapseln 18, die in der Matrix 14 verteilt angeordnet ist. Erfindungsgemäß ist in den Kapseln 18 ein Stoff eines Reaktionsklebstoffsystems enthalten. Da die Kapseln 18 in der in Fig. 1 dargestellten Situation weitgehend geschlossen sind, bleibt der Stoff innerhalb der Matrix 14 isoliert, so dass die chemische Reaktion mit dem mindestens einen weiteren Stoff des Reaktionsklebstoffsystems vermieden wird. Es wird also ein stabiler Zustand auch über eine längere Zeitdauer aufrecht erhalten, so dass das Aufbringen der Matrix auch werkseitig erfolgen kann, wobei das Zusammenfügen der Paneelen 2 und 4 erst zu einem späteren Zeitpunkt erfolgt.

Während des Zusammenfügens, das mit dem Pfeil 20 in Fig. 1 angedeutet ist, setzen die einzelnen Kapseln 18 unter äußerer Einwirkung den in ihnen enthaltenen Stoff zumindest teilweise frei. Somit kommt es zu einer chemischen Reaktion dieses Stoffes des Klebstoffsystems mit einem anderen, in den Matrizen 14 und 16 vorhandenen Stoff des Klebstoffsystems, so dass es zu einem Aushärten kommt. In diesem Zustand ist, wie Fig. 2 darstellt, zwischen den beiden Paneelen 2 und 4 eine gemeinsame Klebstoffschicht 22 ausgebildet, die hauptsächlich aus dem ausreagierten Reaktionsklebstoff besteht.

Beim Zusammenfügen der Paneelen 2 und 4 werden die Kapseln 18 unter Krafteinwirkung durch Druck und Reibung geöffnet, um den Klebstoff zumindest teilweise freizusetzen. Daneben können die Kapseln 18 auch unter Einwirkung äußerer Energie, insbesondere Hochfrequenzenergie, Ultraschallenergie, Wärmeenergie, Lichtenergie oder UV-Energie den Stoff zumindest teilweise freisetzen. Des weiteren können die Kapseln 18 unter Einwirkung einer Flüssigkeit, insbesondere Wasser, den Stoff zumindest teilweise freisetzen.

Die Matrizen 14 und 16 bestehen aus einem Klebstoff, Harz oder Wachs, um eine ausreichende Fixierung und Stabilisierung der verteilt angeordneten Kapseln 18 zu gewährleisten. Zudem bewirken die Matrizen 14 und 16 eine Versiegelung der Fügeflächen 6 und 8, insbesondere gegenüber dem Eindringen von Feuchtigkeit vor und nach dem Fügen der Paneelen 2 und 4.

In den Fig. 3a bis 3d sind verschiedene Ausbildungen der Matrix 14 auf einem Teil der Fügefläche 6 dargestellt.

Fig. 3a zeigt eine Matrix, in der die Kapseln 18 im wesentlichen homogen verteilt angeordnet sind. Dieser Aufbau wird vor allem beim Herstellen dadurch erreicht, dass vor dem Herstellen der Matrix 14 die Kapseln bereits in dem aufzubringenden Material verteilt angeordnet sind und somit in einem Arbeitsgang die Matrix 14 auf die Fügefläche 6 aufgebracht werden kann.

Fig. 3b zeigt eine Ausgestaltung der Matrix 14, bei der die Kapseln 18 im wesentlichen im oberen Abschnitt der Matrix 14 angeordnet sind. Diese Anordnung wird beim Herstellen insbesondere dadurch erreicht, dass zunächst das Material der Matrix 14 auf die Fügefläche 6 aufgebracht wird und anschließend auf die noch nicht verfestigte Matrix 14 die Kapseln 18 aufgebracht werden. Während des anschließenden Trocknens der Matrix 14 werden dann die Kapseln in ihrer Verteilung in der obersten Schicht der Matrix 14 fixiert, so dass sich die in Fig. 3b dargestellte Verteilung ergibt.

Fig. 3c zeigt einen Aufbau der Matrix 14, bei dem die Kapseln 18 innerhalb der gesamten Matrixschicht im wesentlichen mittig angeordnet sind. Zu beiden Seiten oben und unten sind Matrixschichten 14' und 14'' ohne darin enthaltener Kapseln 18 vorgesehen. Diesen Aufbau erhält man beispielsweise dadurch, dass die Kapseln 18, wie im Zusammenhang mit Fig. 3b beschrieben, auf die erste Matrixschicht 14' aufgebracht werden, die anschließend noch mit der weiteren Matrixschicht 14" abgedeckt werden. Die beiden Matrixschichten 14' und 14" können gleiche oder unterschiedliche Stoffe des reaktiven Klebstoffsystems beinhalten.

Fig. 3d zeigt schließlich einen Aufbau der Matrix 14, bei dem im oberen und im unteren Abschnitt der Matrix 14 jeweils eine Schicht von Kapseln 18 angeordnet ist. Diese läßt sich durch eine Kombination der voranstehenden Verfahrensschritte herstellen.

Wie bereits ausgeführt worden ist, besteht der Reaktionsklebstoff aus mindestens zwei Komponenten, wobei die Kapseln 18 eine erste Komponente des Reaktionsklebstoffes enthalten. Für ein einfaches Reaktionsklebstoffsystem besteht die zweite Komponente aus Wasser. Daher reicht es in diesem Fall für die erfindungsgemäße Verbindung aus, dass vor dem Zusammenfügen der Paneelen 2 und 4 eine oder beide Fügeflächen 6 und/oder 8 mit Wasser angefeuchtet oder benetzt werden. Somit kommt es dann, wenn während des Zusammenfügens die Kapseln 18 die erste Komponente freisetzen, zu der zum Aushärten des Reaktionsklebstoffes notwendigen chemischen Reaktion. Bevorzugt wird dafür der in Fig. 3b dargestellte Aufbau der Matrix 14 gewählt, damit die aus den Kapseln 18 austretende Klebstoffkomponente möglichst direkt mit dem Wasser in Berührung kommt.

Bei einer anderen Ausgestaltung weist die Matrix 14 bzw. 16 zumindest teilweise eine zweite Komponente des Reaktionsklebstoffes auf, so dass direkt innerhalb der Matrix 14 bzw. 16 die chemische Reaktion ablaufen kann. Des weiteren können die Kapseln 18 und/oder die Matrix 14 mindestens eine weitere Komponente oder ein weiterer Stoff eines Reaktionsklebstoffes aufweisen, die für die chemische Reaktion erforderlich ist. Für diese Art des Reaktionsklebstoffsystems ist vor allem der in Fig. 3a dargestellte Aufbau der Matrix 14 geeignet, da bereits vor dem Auftreten der äußeren Einwirkung eine homogene Verteilung der Kapseln 18 vorliegt. Ebenso kann eine Matrix 14 mit einem Aufbau gemäß Fig. 3c angewendet werden.

Des weiteren können mindestens zwei verschiedene Sorten von Kapseln 18', 18'' mit unterschiedlichen Komponenten bzw. Stoffen des Reaktionsklebstoffsystems vorgesehen sein. In diesem Fall setzen die verschiedenen Kapseln 18', 18'' ihre jeweiligen Komponenten bzw. Stoffe unter der äußeren Einwirkung frei, so dass dann innerhalb der Matrix 14 bzw. 16 die chemische Reaktion stattfindet. Für die Art des Klebstoffsystems eignet sich insbesondere der in Fig. 3d dargestellt Aufbau der Matrix 14. Ebenso können die Kapseln 18' und 18'' gleichmäßig verteilt in der Matrix 14 angeordnet sein, wie vergleichsweise in Fig. 3a dargestellt ist.

Wie in den Fig. 1 und 2 dargestellt ist, sind beide Fügeflächen 6 und 8 mit der die Kapseln 18 enthaltenen Matrix 14 bzw. 16 versehen.

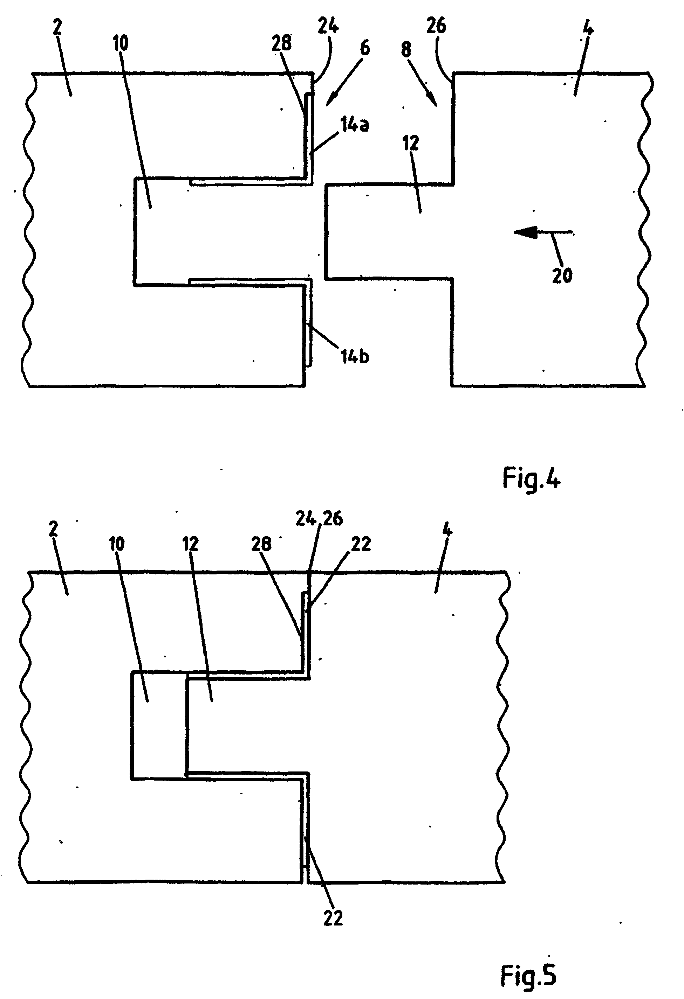

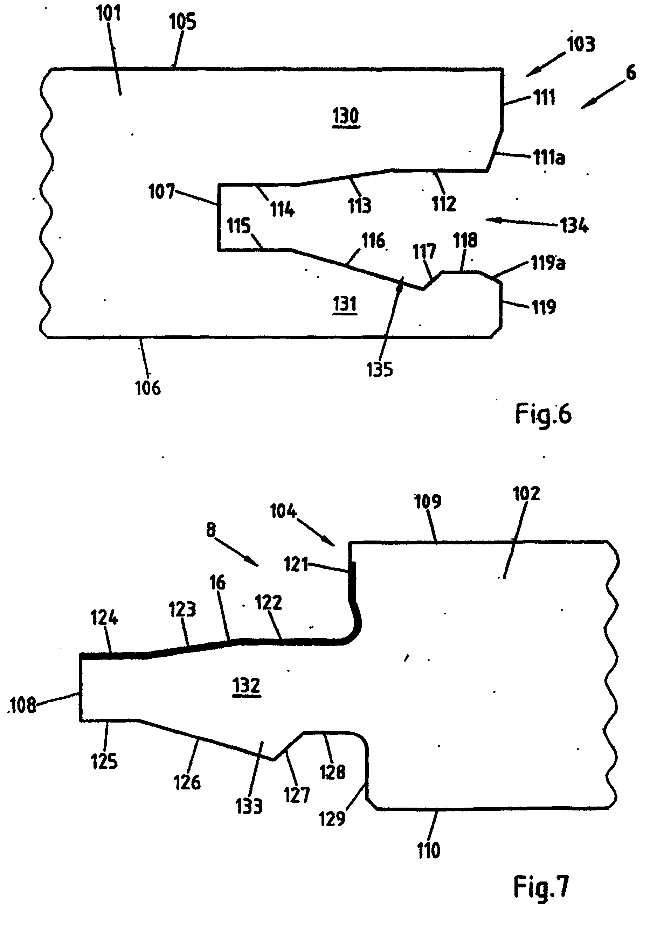

Wie die Fig. 4 und 5 zeigen, ist es im Rahmen der Erfindung ebenfalls möglich, dass nur die Fügefläche 6 mit einer Matrix 14 versehen ist. In diesem Fall wird die Fügefläche 8 erst beim Zusammenfügen mit der Matrix 14 bedeckt und es kommt zum Ausbilden einer festen Verbindung durch den Kontakt mit der Matrix 14.

Bei einer weiteren Ausgestaltung gemäß den Fig. 1 und 2 sind die Fügefläche 6 mit einer Matrix 14 mit ersten Kapseln 18' und die andere Fügefläche 8 mit einer Matrix 16 mit zweiten Kapseln 18'' versehen, wobei die ersten Kapseln 18' eine erste Komponente und die zweiten Kapseln 18'' eine zweite Komponente eines aus mindestens zwei Komponenten bestehenden Reaktionsklebstoffes enthalten. Als bevorzugter Aufbau der Matrizen 14 und 16 werden dabei der in Fig. 3b dargestellte Aufbau angewendet, damit die unterschieldichen Kapseln 18' und 18'' beim Zusammenfügen in direkten Kontakt miteinander treten können und die chemische Reaktion schnellstmöglich ablaufen kann.

Die Fig. 4 und 5 zeigen noch einen weiteren Aspekt der vorliegenden Erfindung. Da die Matrix 14 auf die Oberfläche der Fügefläche 6 aufgetragen worden ist, trägt diese entsprechend ihrer Dicke auf, beispielsweise im Bereich von wenigen Zehntel Millimeter. Um eine gute Passung zwischen den beiden Paneelen 2 und 4 insbesondere im Bereich der Fugenkanten 24 und 26 zu gewährleisten, ist für ein Auftragen der Matrix 14 im Bereich des oberen äußeren vertikalen Abschnittes der Fügefläche 6 eine Vertiefung 28 vorgesehen. Die aufgetragene Matrix 14 steht dann nur geringfügig vor die Fugenkante 14 in Fig. 4 nach rechts vor, so dass nach dem Zusammenfügen der beiden Paneelen 2 und 4 die Fugenkanten 24 und 26 mit Passung aneinander anliegen und eine im wesentlichen dichte Fuge bilden. Daher ist die Matrix 14 auch nicht bis zum obersten Ende der Fugenkante 24 hochgezogen. Gleichzeitig ist die Matrix 14 einem mechanischen Druck durch die Anlage an der Fügefläche 8 ausgesetzt, wodurch die chemische Reaktion in der beschriebenen Weise ausgelöst wird.

Die Fig. 6 bis 8 zeigen ein bekanntes Profil einer Nut-Feder-Verbindung für zwei Paneele 101 und 102 eines Fußbodenbelages, die mittels einer mechanischen Verriegelung miteinander gekoppelt werden können. Das Profil lässt sich wie folgt näher erläutern.

Fig. 6 zeigt eine erste Paneele 101, in deren äußere Kante 103 eine Nut 134 eingearbeitet ist. Dazu weist die Kante 103 eine Vielzahl von unterschiedlich zur Oberfläche 105 geneigte Oberflächen 111 bis 119 auf, deren Verlauf sich aus der Fig. 6 ergibt.

Fig. 7 zeigt eine zweite Paneele 2, die an einer Kante 104 eine Feder 132 aufweist, die vorzugsweise integral mit der Paneele 102 ausgebildet ist. Die Kante 104 weist eine Vielzahl von unterschiedlich zur Oberfläche 109 geneigte Oberflächen 121 bis 129 auf, deren Verlauf sich aus der Fig. 7 ergibt und im wesentlichen parallel zu den korrespondierenden Oberflächen 111 bis 119 ausgerichtet sind.

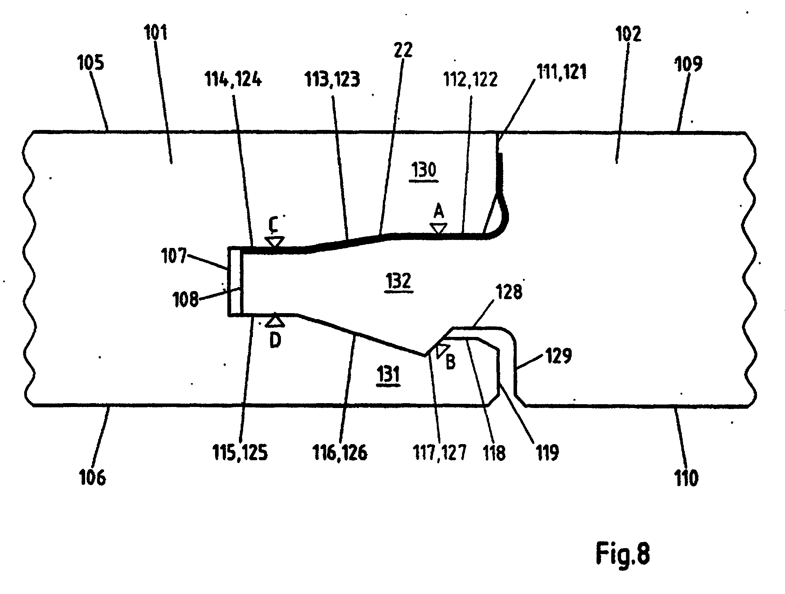

Fig. 8 zeigt die beiden Paneele 101 und 102 im mechanisch miteinander verbundenen Zustand. Dazu steht die Feder 132 der Paneele 102 mit der oberen Lippe 130 und der unteren Lippe 131 der Nut 134 der Paneele 101 in Eingriff.

Im verrasteten bzw. verriegelten Zustand liegen die Oberflächen der Nut 134 einerseits und der Feder 132 andererseits zumindest teilweise paarweise flächig aneinander an. Daraus ergeben sich zumindest die mit den offenen Dreiecken und den Großbuchstaben A, B, C und D gekennzeichneten Paare von Paßflächen 112,122; 114,124; 115,125 und 117,127. Diese bewirken sowohl eine gute Biegesteifigkeit als auch eine gute Sicherung gegen ein Auseinanderschieben der Paneele 101 und 102.

Sowohl die Paneele 101 als auch die Paneele 102 können umseitig entweder mit dem in Fig. 6 dargestellten Profil oder mit dem in Fig. 7 dargestellten Profil versehen sein, so dass eine Mehrzahl von Paneelen 101 und 102 zu einer flächigen Anordnung miteinander verbunden werden können. Dazu weisen die Paneelen 101 und 102 jeweils an einer Längs- und einer Querseite ein Profil gemäß Fig. 6 und an den anderen Seiten gemäß Fig. 7 auf.

Auch wenn das zuvor beschriebene Kantenprofil bereits eine gute Verriegelungsqualität zeigt, kann dessen dauerhafte Wirkung dadurch verstärkt werden, dass die beiden Profile gleichzeitig als Fügeflächen 6 und 8 entsprechend der vorliegenden Erfindung verstanden werden. Dazu zeigen die Fig. 7 und 8, dass die Fügefläche 8 der Paneele 102 mit einer Matrix 16 versehen ist, die einen vorgegebenen Abschnitt der Fügefläche 8 bedeckt. Um die genaue Passung der Oberflächen des Veriegelungsprofils zu gewährleisten, ist in der zuvor bereits beschriebenen Weise der mit der Matrix 16 bedeckte Abschnitt der Fügefläche 16 mit einer umlaufenden Vertiefung versehen, so dass nach dem Auftragen der Matrix 16 diese nur geringfügig über das eigentliche Verriegelungsprofil hinausragt. Beim Zusammenfügen der beiden Profile bzw. Fügeflächen 6 und 8 wird dann durch mechanische Einwirkung durch Druck und Reibung der beschrieben Effekt hervorgerufen, dass die in der Matrix 16 enthaltenen Kapseln 18 aufplatzen und den darin enthaltenen Stoff freisetzen.

Fig. 8 zeigt dann die beiden Paneele 101 und 102 im verriegelten Zustand, wobei die ausreagierte Klebstoffschicht 22 zusätzlich zur mechanischen Verriegelung eine Stabilität der Verbindung bewirkt.

Wie sich aus den Fig. 6 bis 8 ergibt, sind vorliegend bevorzugt die horizontal verlaufenden Oberflächen 122 und 124, bzw. auch 123 des Verriegelungsprofils mit der Matrix 16 versehen. Da gerade diese Oberflächen während des Zusammenfügens der Paneele 101 und 102 mit den korrespondierenden Oberflächen aneinanderreiben, ist zuverlässig gewährleistet, dass die Kapseln 18 aufplatzen bzw. anderweitig mechanisch beschädigt werden.

Die nachfolgenden Beispiele sollen verschiedene Einsatzbereiche der erfindungsgemäßen Verbindung beschreiben. Der Bindemittelauftrag betrug zwischen 250 und 300 g/m² Naßgewicht.

### Beispiel 1:

Das Beispiel 1 umfaßt eine Verklebung von Paneelen eines Laminatfußbodens entsprechend den Fig. 1, 2, 4 und 5. Herkömmliche Paneelen aus einer Trägerplatte, die aus einer hochdichten Faserplatte (HDF) besteht, mit einem konventionellen Nut-Feder-Profil wurden mit einem gekapselten Klebstoffsystem mit ca. 300 g/m² Naßgewicht bestrichen. Das Klebstoffsystem entspricht den Eigenschaften eines peroxidisch härtenden Methacrylat-Systems.

Bei der Serie 1 erfolgte der Kleberauftrag über die gesamte Profilfläche der Nuten und der Federn, bei der Serie 2 erfolgte der Kleberauftrag auf denen zur Bodenoberfläche parallelen Seiten, also der oberen und unteren Nutinnenseite bzw. auf der oberen und unteren Federseite. Es erfolgte kein Kleberauftrag auf den zu den Oberseiten senkrechten Flächen der Profilierung. Die so behandelten Paneelen wurden mit einem Heißlufttrockner angetrocknet und dann über mehrere Tage gelagert.

Als Vergleichsmuster wurden Paneelen wie vom Hersteller empfohlen auf der Federoberseite mit Weißleim der Type D3 bestrichen und im Anschluss die beiden korrespondieren Paneelenseiten zusammengefügt. Der oben herausquellende Leim wurde nach 4 Stunden vorsichtig mit einem Stemmeisen entfernt. Die Prüfung dieser Paneelen erfolgte nach 5 Stunden Trocknungszeit.

Die Paneelen der Serie 1 und 2 wurden ca. 15 Minuten vor der Prüfung zusammengeschoben und im zusammengeschobenen Zustand mehrmals leicht in Richtung der Fuge für wenige Millimeter hin und her bewegt.

Vor der Prüfung wurden Streifen senkrecht zur Klebefuge von einer Breite von 5 cm geschnitten. Die Zugprüfung erfolgte auf einer Universalprüfmaschine. Die ermittelte maximale Zugkraft war wie folgt (Mittelwert aus jeweils 10 Proben)

| | |
|---|---|
| Serie 1 | 1,04 kN/5 cm |
| Serie 2 | 1,24 kN/5cm |
| Vergleichsmuster | 0,36 kN/5cm |

Als Richtwert für die Zugfestigkeit gilt eine Zugfestigkeit ca. 1 kN. Die Muster der Serie 1 und 2 erreichen diesen Wert, das Vergleichsmuster liegt weit darunter. Die Abbindezeit von 5 Stunden ist in keiner Weise ausreichend - man erkennt hier eindeutig den Vorteil des gekapselten Systems für die Verlegung von Fußbodenpaneelen.

### Beispiel 2:

Das Beispiel 2 beschreibt die Verbindung von PVC-Bodenplatten. Zwei Platten der Stärke 1,8 mm wurden an jeweils einer Seite mit einem Winkel von 20° gegengleich angeschrägt, dieses wird auch Schäften bezeichnet. Die beiden schrägen Flächen wurden mit dem Kleber aus Beispiel 1 bestrichen, in bekannter weise abgetrocknet und für mehrere Tage gelagert.

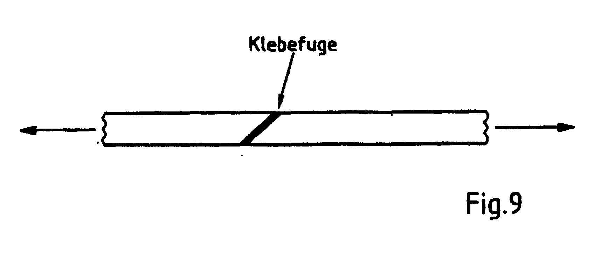

Die geschäfteten Teile wurden dann in derselben Ebene liegend übereinander geschoben und leichter Druck auf die Überlappung ausgeübt. Nach 15 Minuten wurden Zugprüfungen durchgeführt, siehe Fig. 9.

Aus den zusammengefügten Platten wurden Streifen senkrecht zur Klebefuge mit 5 cm Breite geschnitten und diese in analoger Weise wie unter Beispiel 2 erläutert auf Zug geprüft. Die ermittelte maximale Zugkraft betrug 0,25kN/5cm (Mittelwert aus 5 Proben).

## Patentansprüche

1. Verbindung zwischen zwei Paneelen eines Fußbodenbelages (2,4),
- wobei beide Paneelen (2,4) zumindest abschnittsweise miteinander korrespondierende Fügeflächen (6,8) aufweisen, die im verbundenen Zustand zumindest abschnittsweise aneinander anliegen,
- wobei mindestens eine Paneele (2,4) aus einem zellulosehaltigen Material besteht,
- wobei eine ein Klebemittel aufweisende Matrix (14,16) auf mindestens einer der Fügeflächen (6,8) zumindest abschnittsweise angeordnet ist,
- wobei eine Vielzahl von Kapseln (18) in der Matrix (14) verteilt angeordnet ist,
- wobei in den Kapseln (18) ein Stoff eines Reaktionsklebstoffsystems enthalten ist und
- wobei zumindest ein Teil der Kapseln (18) den in ihnen enthaltenen Stoff unter äußerer Einwirkung zumindest teilweise freisetzen,
**dadurch gekennzeichnet,**
- **dass** die Matrix (14) mindestens zwei Matrixschichten (14; 14', 14'') aufweist, wobei mindestens eine Matrixschicht die Kapseln (18) aufweist und wobei mindestens eine weitere Matrixschicht keine Kapseln aufweist.

2. Verbindung nach Anspruch 1,
**dadurch gekennzeichnet,**
**dass** eine die Kapseln (18) aufweisende Matrixschicht (14; 14', 14'') den oberen Abschnitt der Matrix bildet.

3. Verbindung nach Anspruch 1 oder 2,
**dadurch gekennzeichnet,**
**dass** verschiedene Matrixschichten (14', 14'') unterschiedliche Stoffe des Reaktionsklebstoffsystems aufweisen.

4. Verbindung nach einem der Ansprüche 1 bis 3,
**dadurch gekennzeichnet,**
**dass** verschiedene Schichten von Kapseln (18', 18'') unterschiedliche Komponenten des Reaktionsklebstoffes aufweisen

5. Verbindung nach einem der Anspruch 1 bis 4,
**dadurch gekennzeichnet,**
**dass** die Fügeflächen (6,8) beider Paneelen (2,4) als Nut-Feder-Verbindung ausgebildet sind, und dass vorzugsweise die Nut-Feder-Verbindung mechanische Verriegelungsmittel aufweist.

6. Verbindung nach einem der Ansprüche 1 bis 5,
**dadurch gekennzeichnet,**
**dass** die Kapseln (18) unter Krafteinwirkung, insbesondere durch Druck und/oder Reibung, den Stoff zumindest teilweise freisetzen.

7. Verbindung nach einem der Ansprüche 1 bis 5,
**dadurch gekennzeichnet,**
**dass** die Kapseln (18) unter Einwirkung äußerer Energie, insbesondere Wärmeenergie, Ultraschallenergie, Hochfrequenzenergie, Lichtenergie oder UV-Energie den Stoff zumindest teilweise freisetzen.

8. Verbindung nach Anspruch 1 bis 5,
**dadurch gekennzeichnet,**
**dass** die Kapseln (18) unter Einwirkung einer Flüssigkeit, insbesondere Wasser, den Stoff zumindest teilweise freisetzen.

9. Verbindung nach einem der Ansprüche 1 bis 8,
**dadurch gekennzeichnet,**
**dass** die Matrix (14,16) aus einem Klebstoff, Harz oder Wachs besteht.

10. Verbindung nach Anspruch 9,
**dadurch gekennzeichnet,**
**dass** die Matrix (14,16) eine Versiegelung der Fügefläche bewirkt, insbesondere gegenüber dem Eindringen von Feuchtigkeit.

11. Verbindung nach einem der Ansprüche 1 bis 10,
**dadurch gekennzeichnet,**
**dass** der Reaktionsklebstoff aus mindestens zwei Komponenten besteht, dass die Kapseln (18) eine erste Komponente des Reaktionsklebstoffes enthalten und dass Wasser die zweite Komponente darstellt.

12. Verbindung nach einem der Ansprüche 1 bis 10,
**dadurch gekennzeichnet,**
**dass** der Reaktionsklebstoff aus mindestens zwei Komponenten besteht, dass die Kapseln (18) mindestens einen ersten Stoff des Reaktionsklebstoffsystems enthalten und dass die Matrix (14,16) zumindest teilweise einen zweiten Stoff des Reaktionsklebstoffsystems aufweist.

13. Verbindung nach Anspruch 12,
**dadurch gekennzeichnet,**
**dass** die Kapseln (18) und/oder die Matrix (14,16) mindestens einen weiteren Stoff des Reaktionsklebstoffsystems aufweisen.

14. Verbindung nach Anspruch 12 oder 13,
**dadurch gekennzeichnet,**
**dass** mindestens zwei verschiedene Sorten von Kapseln (18) mit darin enthalten unterschiedlichen Stoffen des Reaktionsklebstoffsystems vorgesehen sind.

15. Verbindung nach einem der Ansprüche 1 bis 14,
**dadurch gekennzeichnet,**
**dass** beide Fügeflächen (6,8) mit der die Kapseln (18) enthaltenen Matrix (14,16) versehen sind.

16. Verbindung nach Anspruch 15,
**dadurch gekennzeichnet,**
**dass** die Fügefläche (6) mit einer Matrix (14) mit ersten Kapseln (18') und die andere Fügefläche (8) mit einer Matrix (16) mit zweiten Kapseln (18'') versehen sind, wobei die ersten Kapseln (18') einen ersten Stoff und die zweiten Kapseln (18'') einen zweite Stoff eines Reaktionsklebstoffsystems enthalten.

17. Verbindung nach einem der Ansprüche 1 bis 16,
**dadurch gekennzeichnet,**
**dass** die mindestens eine Paneele (2,4) aus einem ligno-zellulosehaltigen Material, vorzugsweise aus Holz oder aus einem Holzwerkstoff besteht.

18. Verbindung nach Anspruch 17,
**dadurch gekennzeichnet,**
**dass** die nicht zellulosehaltige Paneele (2,4) aus einem Kunststoff besteht.

19. Paneele
- mit mindestens einer Fügefläche (6, 8) für eine Verbindung mit weiteren Paneelen (2, 4),
- wobei mindestens eine Paneele (2,4) aus einem zellulosehaltigen Material besteht,
- wobei eine Matrix (14,16) auf mindestens einer der Fügeflächen (6,8) zumindest abschnittsweise angeordnet ist,
- wobei eine Vielzahl von Kapseln (18) in der Matrix (14) verteilt angeordnet ist,
- wobei in den Kapseln (18) ein Stoff eines Reaktionsklebstoffsystems enthalten ist und
- wobei zumindest ein Teil der Kapseln (18) den in ihnen enthaltenen Stoff unter äußerer Einwirkung zumindest teilweise freisetzen,
**dadurch gekennzeichnet,**
- **dass** die Matrix (14) mindestens zwei Matrixschichten (14; 14', 14'') aufweist, wobei mindestens eine Matrixschicht die Kapseln (18) aufweist und wobei mindestens eine weitere Matrixschicht keine Kapseln aufweist.

20. Paneele nach Anspruch 19,
**gekennzeichnet durch** ein oder mehrere Merkmale der Ansprüche 2 bis 18.

## Claims

1. Joint between two panels of a floor covering (2, 4),
- wherein both panels (2, 4) are provided with at least partially corresponding joint faces (6, 8), which in the joint state at least partially contact one another,
- wherein at least one panel (2, 4) is made of a cellulose-containing material,
- wherein a matrix (14, 16) containing an adhesive is positioned at least partially on at least one of the joint faces (6, 8),
- wherein multiple capsules (18) are positioned distributed in the matrix (14),
- wherein a component of a reaction adhesive system is contained in the capsules (18) and
- wherein at least part of the capsules (18) at least partially release the component contained therein under external influence,
**characterised in that**
- the matrix (14) comprises at least two matrix layers (14; 14'; 14''), wherein at least one matrix layer comprises the capsules (18) and wherein a further matrix layer comprises no capsules.

2. Joint according to claim 1,
**characterised in that**
a matrix layer (14; 14'; 14'') containing the capsules (18) forms the upper part of the matrix.

3. Joint according to claim 1 or 2,
**characterised in that**
different matrix layers (14'; 14'') contain different components of the reaction adhesive system.

4. Joint according to one of the claims 1 to 3,
**characterised in that**
different layers of capsules (18'; 18'') comprise different components of the reaction adhesive.

5. Joint according to one of the claims 1 to 4,
**characterised in that**
the joint faces (6, 8) of both panels (2, 4) are formed as a tongue-and-groove joint and that the tongue-and-groove joint preferably comprises mechanical locking means.

6. Joint according to one of the claims 1 to 5,
**characterised in that**
the capsules (18) at least partially release the component under effect of force, particularly through pressure and/or friction.

7. Joint according to one of the claims 1 to 5,
**characterised in that**
the capsules (18) at least partially release the component under the effect of external energy, particularly thermal energy, ultrasound energy, high frequency energy, light energy, or UV energy.

8. Joint according to one of the claims 1 to 5,
**characterised in that**
the capsules (18) at least partially release the component under the effect of a liquid, particularly water.

9. Joint according to one of the claims 1 to 8,
**characterised in that**
the matrix (14, 16) is made of an adhesive, resin, or wax.

10. Joint according to claim 9,
**characterised in that**
the matrix (14, 16) effects a seal of the joint face, particularly against the penetration of moisture.

11. Joint according to one of the claims 1 to 10,
**characterised in that**
the reaction adhesive comprises at least two components, the capsules (18) contain a first component of the reaction adhesive, and water represents the second component.

12. Joint according to one of the claims 1 to 10,
**characterised in that**
the reaction adhesive comprises at least two components, the capsules (18) contain at least one component of the reaction adhesive system, and the matrix (14, 16) at least partially has a second component of the reaction adhesive system.

13. Joint according to claim 12,
**characterised in that**
the capsules (18) and/or the matrix (14, 16) have at least one further component of the reaction adhesive system.

14. Joint according to claim 12 or 13,
**characterised in that**
at least two different types of capsules (18) having different components of the reaction adhesive system contained therein are provided.

15. Joint according to one of the claims 1 to 14,
**characterised in that**
both joint faces (6, 8) are provided with the matrix (14, 16) containing the capsules (18).

16. Joint according to claim 15,
**characterised in that**
the joint face (6) is provided with a matrix (14) having first capsules (18') and the other joint face (8) is provided with a matrix (16) having second capsules (18"), with the first capsules (18') containing a first component and the second capsules (18") containing a second component of a reaction adhesive system.

17. Joint according to one of the claims 1 to 16,
**characterised in that**
the at least one panel (2, 4) is made of a lingocellulose-containing material, preferably of wood or wooden material.

18. Joint according to claim 17,
**characterised in that**
the non cellulose-containing panel (2, 4) is made of a plastic.

19. Panel
- having at least one joint face (6, 8) for a joint with further panels (2, 4),
- wherein at least one panel (2, 4) is made of a cellulose-containing material,
- wherein a matrix (14, 16) is positioned at least partially on at least one of the joint faces (6, 8),
- wherein multiple capsules (18) are positioned distributed in the matrix (14),
- wherein a component of a reaction adhesive system is contained in the capsules (18), and
- wherein at least part of the capsules (18) at least partially release the component contained therein under external influence,
**characterised in that**
- the matrix (14) comprises at least two matrix layers (14; 14'; 14''), wherein at least one matrix layer comprises the capsules (18) and wherein a further matrix layer comprises no capsules.

20. Panel according to claim 20,
**characterised by** one or more features of claim 2 to 18.

## Revendications

1. Connexion entre deux panneaux de revêtement de sol (2, 4),
- les deux panneaux (2, 4) comprenant des surfaces de jointure (6, 8), qui correspondent au moins par sections entre elles et qui sont au moins par sections en contact entre elles lorsqu'elles sont assemblées,
- au moins un panneau (2, 4) se composant d'un matériau contenant de la cellulose,
- une matrice (14, 16) munie d'une colle étant disposée au moins par sections sur au moins une des surfaces de jointure (6, 8),
- une pluralité de capsules (18) étant disposée par répartition dans la matrice (14),
- une matière d'un système de colle à réaction étant contenue dans les capsules (18) et
- au moins une partie des capsules (18) libérant, sous une influence extérieure, au moins partiellement la matière qu'elles contiennent,
**caractérisée en ce que**
- la matrice (14) comprend au moins deux couches de matrices (14, 14', 14"), au moins une couche de matrices comprenant les capsules (18) et au moins une autre couche de matrices ne comprenant pas de capsules.

2. Connexion selon la revendication 1,
**caractérisée en ce qu'**
une couche de matrices (14, 14', 14") comprenant les capsules (18) forme la section supérieure de la matrice.

3. Connexion selon la revendication 1 ou 2,
**caractérisée en ce que**
différentes couches de matrices (14', 14") comprennent différentes matières du système de colle à réaction.

4. Connexion selon l'une des revendications 1 à 3,
**caractérisée en ce que**
différentes couches de capsules (18', 18") comprennent différents composants du système de colle à réaction.

5. Connexion selon l'une des revendications 1 à 4,
**caractérisée en ce que**
les surfaces de jointure (6, 8) des deux panneaux (2, 4) sont conçues comme liaison à rainure et languette et **en ce que** la liaison à rainure et languette comprend de préférence des moyens mécaniques de verrouillage.

6. Connexion selon l'une des revendications 1 à 5,
**caractérisée en ce que**
sous l'action d'une force, en particulier par pression et/ou par frottement, les capsules (18) libèrent au moins partiellement la matière.

7. Connexion selon l'une des revendications 1 à 5,
**caractérisée en ce que**
sous l'action d'une énergie extérieure, en particulier de l'énergie thermique, de l'énergie à ultrasons, de l'énergie à haute fréquence, de l'énergie lumineuse ou de l'énergie à ultraviolets, les capsules (18) libèrent au moins partiellement la matière.

8. Connexion selon la revendication 1 à 5,
**caractérisée en ce que**
sous l'action d'un liquide, en particulier de l'eau, les capsules (18) libèrent au moins partiellement la matière.

9. Connexion selon l'une des revendications 1 à 8,
**caractérisée en ce que**
la matrice (14, 16) se compose d'une colle, d'une résine ou d'une cire.

10. Connexion selon la revendication 9,
**caractérisée en ce que**
la matrice (14, 16) provoque une imperméabilisation de la surface de jointure, en particulier par rapport à la pénétration d'humidité.

11. Connexion selon l'une des revendications 1 à 10,
**caractérisée en ce que**
la colle à réaction se compose d'au moins deux composants, **en ce que** les capsules (18) contiennent un premier composant de la colle à réaction et **en ce que** l'eau constitue le deuxième composant.

12. Connexion selon l'une des revendications 1 à 10,
**caractérisée en ce que**
la colle à réaction se compose d'au moins deux composants, **en ce que** les capsules (18) contiennent au moins une première matière du système de colle à réaction et **en ce que** la matrice (14, 16) comprend au moins partiellement une deuxième matière du système de colle à réaction.

13. Connexion selon la revendication 12,
**caractérisée en ce que**
les capsules (18) et/ou la matrice (14, 16) comprennent au moins une autre matière du système de colle à réaction.

14. Connexion selon la revendication 12 ou 13,
**caractérisée en ce que**
sont prévues au moins deux sortes différentes de capsules (18) contenant différentes matières du système de colle à réaction.

15. Connexion selon l'une des revendications 1 à 14,
**caractérisée en ce que**
les deux surfaces de jointure (6, 8) sont munies de la matrice (14, 16) contenant les capsules (18).

16. Connexion selon la revendication 15,
**caractérisée en ce que**
la surface de jointure (6) est munie d'une matrice (14) avec des premières capsules (18') et **en ce que** l'autre surface de jointure (8) est munie d'une matrice (16) avec des deuxièmes capsules (18"), les premières capsules (18') contenant une première matière et les deuxièmes capsules (18") une deuxième matière d'un système de colle à réaction.

17. Connexion selon l'une des revendications 1 à 16,
**caractérisée en ce que**
l'au moins un panneau (2, 4) se compose d'un matériau contenant de la lignocellulose, de préférence de bois ou de matériau à base de bois.

18. Connexion selon la revendication 17,
**caractérisée en ce que**
le panneau ne contenant pas cellulose (2, 4) se compose de matériau synthétique.

19. Panneau
- avec au moins une surface de jointure (6, 8) pour une connexion avec d'autres panneaux (2, 4),
- au moins un panneau (2, 4) se composant d'un matériau contenant de la cellulose,
- une matrice (14, 16) étant disposée au moins par sections sur au moins une des surfaces de jointure (6, 8),
- une pluralité de capsules (18) étant disposée par répartition dans la matrice (14),
- une matière d'un système de colle à réaction étant contenue dans les capsules (18) et
- au moins une partie des capsules (18) libérant, sous une influence extérieure, au moins partiellement la matière qu'elles contiennent,
**caractérisé en ce que**
la matrice (14) comprend au moins deux couches de matrices (14, 14', 14"), au moins une couche de matrice comprenant les capsules (18) et au moins une autre couche de matrice ne comprenant pas de capsules.

20. Panneau selon la revendication 19,
**caractérisé par** une ou plusieurs particularités des revendications 2 à 18.
